# FASCICULE DE BREVET EUROPEEN

(11) **EP 2 793 443 B1**
(45) Date de publication et mention de la délivrance du brevet: **16.08.2017**
(21) Numéro de dépôt: 14165054.9
(22) Date de dépôt: 17.04.2014
(51) Int. Cl.: H04L 29/06

(54) **PROCÉDÉ, DISPOSITIF ET SYSTÈME DE DÉTECTION DE PROBLÈME DE QUALITÉ DE SERVICE**
VERFAHREN, VORRICHTUNG UND SYSTEM ZUR ERKENNUNG VON QUALITÄTSPROBLEMEN EINES DIENSTES
METHOD, DEVICE AND SYSTEM FOR DETECTING QUALITY-OF-SERVICE PROBLEMS

(30) Priorité: 19.04.2013 FR 1353564
(43) Date de publication de la demande: 22.10.2014
(73) Titulaire: Orange, 75015 Paris (FR)
(72) Inventeur: Bouvet, Bertrand, 22700 Perros-Guirec (FR); Toutain, François, 22700 Louannec (FR); Salou, Catherine, 22300 Lannion (FR); Cosquer, Mathilde, 22300 Caouennec-Lanvezeac (FR)

(56) Documents cités:
- EP-A1- 2 264 959
- US-A1- 2008 291 930

## Description

La présente invention se rapporte au domaine des télécommunications, et plus précisément aux systèmes de contrôle de la qualité de service lors de transmissions multimédia sur les réseaux IP (pour Internet Protocol en anglais).

La qualité perçue lors d'une communication multimédia sur réseau IP dépend d'un certain nombre de facteurs, comme par exemple la bande passante disponible, la capacité de traitement des terminaux ou encore la qualité des transmissions sans fil mises en oeuvre. D'autre part, la qualité de la transmission au cours d'une communication multimédia n'est pas toujours symétrique et de ce fait, les participants à une même communication multimédia peuvent ne pas rencontrer les mêmes désagréments en cas de mauvaise qualité de la transmission.

Certaines applications de communication peuvent toutefois fournir une information sur la qualité de service, ou QoS (pour Quality Of Service en anglais). Cette information est souvent matérialisée sur le terminal par un pictogramme associé à un code couleur (par exemple rouge, orange, vert) ou bien par un histogramme reflétant la qualité de la transmission.

Les applications de communication IP temps réel utilisant le protocole RTP (Real-Time Transport Protocol) pour transmettre et recevoir les flux média (audio, vidéo, ..) et son protocole complémentaire RTCP (Real-Time Transport Control Protocol) tels que décrits dans le standard IETF RFC3550 pour transmettre et recevoir des informations de qualité de service (nombre de paquets IP perdus, délai, gigue,...), peuvent notamment donner aux utilisateurs une indication sur la qualité de la transmission. Malheureusement cette information n'est pas d'une grande utilité quand il s'agit de diagnostiquer la cause du problème, puisqu'il s'agit d'une information mesurée de bout en bout, de terminal à terminal. Lorsque la qualité est détectée comme étant mauvaise au niveau de la communication multimédia, elle ne fait que confirmer ce qui est constaté par les utilisateurs (vidéo pixellisée ou saccadée, son dégradé...) et n'apporte aucune information quant à la localisation du problème. Or, si l'utilisateur disposait d'une information lui permettant d'identifier la localisation du problème, il pourrait tenter d'y remédier (par exemple en se rapprochant de son point d'accès wifi ou en libérant de la mémoire sur son terminal).

La demande de brevet US 2008/0291930 A1 déposée par Ericsson^{tm} le 21 octobre 2005 propose une méthode permettant d'assurer une qualité de service de bout en bout pour des communications établies au travers d'un réseau IMS (IP Multimedia Subsystem). Le procédé se base sur un équipement intermédiaire tel qu'une passerelle domestique sur laquelle est implémenté une interface de gestion de la qualité de service selon le standard « UPnP Qos Architecture » de l'UPnP Forum. Malgré tout l'intérêt de cette méthode, elle ne permet pas de localiser de manière efficace un problème de QoS lors d'une communication.

La demande de brevet EP 2 264 959 A1 concerne une passerelle multimédia adaptée pour interfacer un terminal téléphonique selon le protocole IMS et un terminal téléphonique RTC (Réseau Téléphonique Commuté). La passerelle multimédia est également adaptée pour recevoir des informations de qualité de service envoyée par un terminal IMS et ajuster de façon dynamique la qualité de la communication établie avec le terminal RTC. Cette méthode permet une amélioration de la QoS lors d'une communication mais ne permet pas de localiser un problème affectant la QoS.

Il existe donc un besoin pour l'utilisateur de pouvoir localiser l'origine d'un problème de qualité de la communication. Ce besoin devrait être grandissant dans la mesure où les terminaux des utilisateurs sont de plus en plus connectés en utilisant différents réseaux d'accès (Edge, 3G, 4G, WiFi Home, Wifi communautaire, etc...), ces derniers offrant des bandes passantes et QoS très variables et fluctuantes.

### Objet de l'invention

La présente invention améliore la situation par rapport à l'état de la technique.

A cet effet, l'invention concerne un procédé de localisation d'un problème de qualité de service mis en oeuvre sur un terminal lors d'une session multimédia établie entre deux terminaux au travers d'un ou plusieurs réseaux de communication comprenant au moins une passerelle média apte à retransmettre les paquets de données média sans traitement particulier selon un premier mode de gestion dit « mode routeur », les terminaux obtenant une première donnée de qualité de service relative à la session multimédia. Le procédé est tel qu'il comporte, suite à un changement du mode de gestion de la session multimédia par la passerelle média vers un mode de gestion dit « mode relais » dans lequel la session multimédia initialement établie entre les terminaux est scindée en deux sessions multimédia distinctes, les étapes suivantes :
- obtention d'une seconde donnée de qualité de service relative à une des deux sessions multimédia établies suite au changement de mode de gestion de la passerelle média ;
- comparaison de la première et de la seconde donnée de qualité de service ;
- localisation du problème de qualité de service en fonction du résultat de la comparaison.

La seconde qualité de service informe de la qualité sur une session qui n'est plus de bout en bout. L'utilisateur d'un des terminaux peut alors localiser un problème de qualité de service par comparaison avec la première information de qualité relative à la session multimédia de bout en bout. Il peut ainsi adapter son comportement le cas échéant.

Dans cette description et ainsi que dans les revendications, les termes « terminal » et « terminaux » sont à prendre au sens large et peuvent désigner des équipements réseau situés de part et d'autre d'un lien de communication. L'invention peut donc s'appliquer dans le cas d'une communication entre deux terminaux, entre un équipement et un terminal ou entre deux équipements. Par exemple, et de façon non exhaustive, l'invention peut s'appliquer à une communication entre deux terminaux de téléphonie ou de visiophonie, entre un terminal de téléphonie et un serveur de messagerie, ou encore entre un terminal de type ordinateur personnel ou télévision connectée et un serveur de diffusion vidéo.

Les différents modes ou caractéristiques de réalisation mentionnés ci-après peuvent être ajoutés indépendamment ou en combinaison les uns avec les autres, aux étapes du procédé défini ci-dessus.

Selon un mode particulier de réalisation, le procédé de localisation comporte une étape d'envoi d'une demande de changement du mode de gestion vers la passerelle média précédant l'étape d'obtention de la seconde donnée de qualité de service.

De cette façon, le terminal peut, de sa propre initiative, provoquer un changement de mode de fonctionnement de la passerelle média et ainsi obtenir une deuxième donnée de qualité de service lui permettant de localiser le problème de QoS.

Selon un autre mode particulier de réalisation, l'envoi de la demande de changement du mode de gestion est déclenchée suite à la détection d'un problème de qualité de service par comparaison de la première donnée de qualité de service à un seuil prédéterminé.
La localisation du problème de QoS peut ainsi être déclenchée automatiquement, sans action de l'utilisateur, lorsque des perturbations altèrent la qualité de la communication.

Selon un autre mode de réalisation, l'envoi de la demande de changement du mode de gestion est déclenchée suite à une action de l'utilisateur sur une interface du premier ou deuxième terminal. Ainsi, lorsque l'utilisateur constate un problème de qualité altérant une communication, il peut commander explicitement la localisation du problème via l'interface de son terminal.

Dans un autre mode particulier de réalisation, la demande de changement du mode de gestion de la session multimédia est un message de renégociation SIP de type RE-INVITE ou UPDATE + PRACK comprenant une composante SDP enrichi d'un nouveau paramètre apte à faire basculer ladite passerelle média dans le mode de gestion « relais ».
Le procédé est ainsi compatible avec un coeur de réseau de type IMS (IP Multimédia Subsystem) et ne nécessite pas la définition d'un type de message de signalisation dédié qui pourrait mettre en défaut un équipement qui ne mettrait pas en oeuvre l'invention.

Selon un autre mode de réalisation, le procédé de localisation comporte une étape de réception d'une notification du changement du mode de gestion de la passerelle média.
Ainsi, un terminal qui reçoit cette notification peut indiquer à son utilisateur que son correspondant ou un équipement du réseau a demandé la localisation d'un problème de QoS et le terminal peut interpréter la nouvelle donnée de qualité de service reçue de manière à afficher un diagnostic.

Selon un autre mode de réalisation particulier, la notification de changement du mode de gestion de la session multimédia est un message de renégociation SIP de type RE-INVITE ou UPDATE + PRACK comprenant une composante SDP enrichi d'un nouveau paramètre apte à déclencher les étapes de comparaison et de localisation.

Le procédé est ainsi compatible avec un coeur de réseau de type IMS (IP Multimédia Subsystem) et ne nécessite pas la définition d'un type de message de signalisation dédié qui pourrait mettre en défaut un équipement qui ne mettrait pas en oeuvre l'invention.

Dans un autre mode particulier de réalisation, la première donnée de qualité de service est obtenue à partir des paquets de données reçus suivant le protocole RTCP et/ou à partir de l'analyse des paquets reçus suivant le protocole RTP.
De cette façon, le procédé peut s'appuyer sur des protocoles existants et largement déployés pour obtenir la donnée de qualité de service, facilitant ainsi l'intégration de l'invention dans les réseaux de communication existants.

Selon un autre mode de réalisation, le procédé de localisation comporte une étape d'obtention de paramètres susceptibles d'influencer la QoS sur le terminal et une étape de suggestion d'actions possibles pour améliorer la qualité de service en fonction des paramètres obtenus.
L'utilisateur peut ainsi réaliser les actions indiquées dans le but d'améliorer la qualité de la communication. Les paramètres recueillis peuvent être par exemple la force du signal wifi, le taux d'utilisation du processeur, de la mémoire ou de la connexion réseau, ou tout autre paramètre susceptible d'influencer la QoS. Dans le cas où le procédé de localisation a établi que le problème de QoS était situé du côté d'un utilisateur, le procédé suivant l'invention pourra par exemple afficher des suggestions sur l'écran du terminal et proposer par exemple, à l'utilisateur de se rapprocher de son point d'accès wifi, de stopper d'autres applications sur son terminal afin de libérer des ressources ou toute autre action susceptible d'améliorer la QoS sur la communication en fonction des paramètres recueillis sur le terminal.

Selon un autre mode particulier de réalisation, le procédé de localisation comporte suite à l'étape de localisation, une étape d'envoi vers la passerelle média d'une commande de changement du mode de gestion de la session multimédia vers le mode de gestion dit « mode routeur ».
Le procédé permet ainsi le retour au mode de fonctionnement initial suite à la localisation du problème et permet ainsi de décharger la passerelle média des traitements supplémentaires occasionnés par l'activation du mode « relais ».

L'invention concerne également un procédé d'aide au diagnostic d'un problème de qualité de service mis en oeuvre par une passerelle média lors d'une session multimédia établie entre deux terminaux, la passerelle média étant apte à retransmettre les paquets de données sans traitement particulier selon un premier mode de gestion dit « mode routeur », le procédé étant caractérisé en ce qu'il comporte les étapes suivantes :
- obtention d'une demande de changement du mode de gestion de la session multimédia.

De manière optionnelle, l'obtention de la demande peut faire suite à une étape de réception par un équipement média d'une première donnée de QoS calculée et transmise par les terminaux;
- activation d'un second mode de gestion dit « mode relais » dans lequel la session multimédia initialement établie entre les deux terminaux est scindée en deux sessions distinctes, une première session établie entre un premier terminal et la passerelle média, une seconde session établie entre la passerelle média et un second terminal, la passerelle média relayant de façon bidirectionnelle les paquets de données média reçus d'une session vers l'autre session ;
- calcul de la donnée de qualité de service relative à la première session établie entre le premier terminal et la passerelle et calcul de la donnée de qualité de service relative à la seconde session établie entre la passerelle et le second terminal ;
- transmission vers le premier terminal de la donnée de qualité de service relative à la première session et calcul et transmission vers le second terminal de la donnée de qualité de service relative à la seconde session. changement du mode de gestion de la session vers le mode « routeur »

L'activation du mode de gestion « relais » sur la passerelle média permet le découpage de la session initialement établie de bout en bout en deux tronçons indépendants. Ce découpage en deux sessions permet aux terminaux de localiser l'origine d'un problème de QoS par dichotomie.

Selon un mode particulier de réalisation du procédé d'aide au diagnostic, la demande de changement du mode de gestion est obtenue suite à la réception par la passerelle média d'une commande transmise par un équipement apte à interpréter le protocole de signalisation mis en oeuvre pour établir la session multimédia.
De cette façon, le changement de mode de fonctionnement peut être effectué à l'initiative d'un équipement réseau apte à gérer les communications et services de l'utilisateur, comme par exemple un AS (Application Server en anglais) ou un P-CSCF (Proxy-Call State Control Function) dans le cas d'un réseau IMS.

Selon un mode particulier de réalisation du procédé d'aide au diagnostic, la demande de changement du mode de gestion est obtenue suite à la détection par un équipement média d'un problème de qualité de service par comparaison d'une donnée de qualité de service relative à la session établie en « mode routeur » à un seuil prédéterminé.
La passerelle média est ainsi apte à déclencher elle-même la phase de diagnostic permettant aux terminaux de localiser un problème de QoS selon le procédé de localisation. En outre, dans le cas où les terminaux ne mettent pas en oeuvre le procédé, la passerelle média ou un équipement la pilotant ou en lien, peut par exemple provoquer l'envoi d'une notification vers le terminal mis en cause, par exemple par SMS (Short Message System) ou par n'importe quel autre système de notification.

L'invention concerne également un dispositif de localisation d'un problème de qualité de service lors d'une session multimédia établie entre deux dispositifs au travers d'un ou plusieurs réseaux de communication comprenant au moins une passerelle média apte à retransmettre les paquets de données média sans traitement particulier selon un premier mode de gestion dit « mode routeur », les dispositifs obtenant une première donnée de qualité de service relative à la session multimédia, le dispositif étant caractérisé en ce qu'il comporte:
- un module d'obtention (103) d'une seconde donnée de qualité de service relative à l'une des deux sessions multimédia établies suite au changement de mode de gestion de la passerelle média ;
- un module de comparaison (107) de la première et de la seconde donnée de qualité de service ;
- un module de localisation (108) du problème de qualité de service en fonction du résultat de la comparaison ;
ces modules étant mis en oeuvre suite à un changement du mode de gestion de la session multimédia par la passerelle média vers un mode de gestion dit « mode relais » dans lequel la session multimédia initialement établie entre les dispositifs est scindée en deux sessions multimédia distinctes.

L'invention concerne également un terminal de communication comprenant un dispositif de localisation tel que décrit ci-dessus.

L'invention concerne aussi un dispositif d'aide au diagnostic d'un problème de qualité de service lors d'une session multimédia établie entre deux terminaux, le dispositif étant apte à retransmettre les paquets de données sans traitement particulier selon un premier mode de gestion dit « mode routeur », le dispositif étant caractérisé en ce qu'il comprend :
- un module d'obtention d'une demande de changement du mode de gestion de la session multimédia ;
- un module d'activation d'un second mode de gestion dit « mode relais » dans lequel la session multimédia initialement établie entre les deux terminaux est scindée en deux sessions distinctes, une première session établie entre un premier terminal et le dispositif, une seconde session établie entre le dispositif et un second terminal, le dispositif relayant de façon bidirectionnelle les paquets de données média reçus d'une session vers l'autre session ;
- un module de calcul de la donnée de qualité de service relative à la première session et calcul de la donnée de qualité de service relative à la seconde session ;
- un module de transmission vers le premier terminal de la donnée de qualité de service relative à la première session et transmission vers le second terminal de la donnée de qualité de service relative à la seconde session. Ce module peut également être apte à recevoir les données de QoS calculées et transmises par le premier et le second terminal ;
- un module de changement du mode de gestion de la session vers le mode « routeur ».

L'invention concerne également un équipement réseau comprenant un dispositif d'aide au diagnostic tel que décrit ci-dessus.

L'invention concerne aussi un système de localisation d'un problème de QoS comprenant au moins un dispositif de localisation conforme à la description ci-dessus et au moins un dispositif d'aide au diagnostic conforme à la description ci-dessus.

L'invention concerne aussi un programme d'ordinateur comportant des instructions pour l'exécution du procédé de localisation tel que décrit ci-dessus et/ou du procédé d'aide au diagnostic tel que décrit ci-dessus, lorsque le programme est exécuté par un processeur.

Les terminaux, équipements, dispositifs et programmes présentent des avantages analogues à ceux des procédés correspondant décrits ci-dessus.

### Liste des figures

D'autres avantages et caractéristiques de l'invention apparaîtront plus clairement à la lecture de la description suivante d'un mode de réalisation particulier de l'invention, donné à titre d'exemple illustratif et non limitatif, et des dessins annexés, parmi lesquels :
- la figure 1 illustre un exemple d'environnement de mise en oeuvre du procédé selon un mode de réalisation de l'invention,
- la figure 2a illustre les étapes du procédé de localisation d'un problème de qualité de service mis en oeuvre par un terminal dans un premier mode de réalisation,
- la figure 2b illustre les étapes du procédé de localisation d'un problème de qualité de service mis en oeuvre par un terminal dans un deuxième mode de réalisation,
- la figure 3 illustre les étapes du procédé d'aide au diagnostic d'un problème de qualité de service mis en oeuvre par une passerelle média selon un mode particulier de réalisation,
- la figure 4 représente sous forme de chronogramme les messages pouvant être échangés entre différents dispositifs mettant en oeuvre l'invention, selon un mode particulier de réalisation,
- la figure 5 illustre l'architecture d'un dispositif de localisation selon un mode particulier de réalisation de l'invention, et
- la figure 6 illustre l'architecture d'un dispositif d'aide au diagnostic selon un mode particulier de réalisation de l'invention.

### Description d'un mode particulier de réalisation

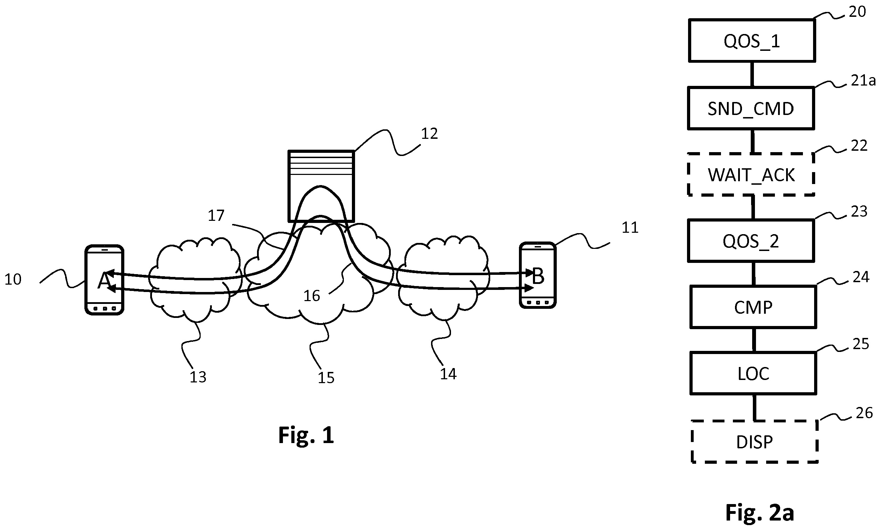

La figure 1 illustre un exemple d'environnement de mise en oeuvre du procédé de localisation et du procédé d'aide au diagnostic selon un mode particulier de réalisation de l'invention. Dans cet exemple, l'environnement comprend un premier terminal (10) connecté à un coeur de réseau de IP (15) pouvant être un réseau de type IMS (IP Multimedia Subsystem), par l'intermédiaire d'un réseau d'accès (13), pouvant être par exemple un réseau ADSL (Asymetric Digital Subscriber Line), fibre optique, câble ou encore 3G. L'environnement comprend un second terminal (11) connecté au coeur de réseau IP (15) par l'intermédiaire d'un autre réseau d'accès (14), pouvant être par exemple et de façon non exhaustive un réseau ADSL, fibre optique, câble ou encore un réseau 3G. Les terminaux peuvent être connectés à leur réseau d'accès par l'intermédiaire d'un point d'accès non représenté sur la figure. Ce point d'accès peut être par exemple un point d'accès WIFI. Dans cet exemple de mise en oeuvre du procédé, le coeur de réseau IP (15) contient une passerelle média (12) par laquelle transitent les flux de données média (16) et les informations de qualité de service (17) relatifs à une communication établie entre les terminaux.

Prenons pour exemple un utilisateur A du premier terminal (10) en communication multimédia avec un utilisateur B du second terminal (11). La communication multimédia peut être une communication audio simple ou une communication audio et vidéo ou bien encore tout autre communication mettant en oeuvre au moins un média.
La communication peut être perturbée pour différentes raisons, comme par exemple un manque de ressource sur un terminal qui empêcherait de correctement encoder et/ou décoder le flux multimédia, ce manque de ressource pouvant être causé par d'autres applications fonctionnant en parallèle sur le terminal. Les perturbations peuvent également être liées au réseau d'accès local ou au réseau d'accès distant qui peuvent manquer de bande passante, être de mauvaise qualité ou encore être sous-dimensionnés (par exemple, une cellule radio encombrée). Dans le cas d'un réseau d'accès sans fil, la qualité du signal influence également directement la qualité de la communication. On peut toutefois noter que les coeurs de réseau IP sont généralement hors de cause quand il y a un problème puisqu'ils sont souvent surdimensionnés.

Les perturbations se manifestent alors d'un point de vue technique par des paquets de données de communication perdus ou altérés, de-séquencés ou encore par un délai d'acheminement accru. Du point de vue de l'utilisateur, ces perturbations peuvent se traduire par des interruptions ou même un brouillage du signal pouvant rendre une conversation inintelligible.

Le procédé de localisation et le procédé d'aide au diagnostic mis en oeuvre respectivement dans le terminal (10) et la passerelle média (12) permettent de scinder la session multimédia en au moins deux tronçons et d'obtenir de ce fait des mesures de qualité de service tronçon par tronçon, par exemple entre le terminal A (10) et la passerelle média puis entre la passerelle média et le terminal B (11), de manière à obtenir une information relative à la localisation des perturbations. L'invention permet de réaliser les mesures tronçon par tronçon sans impact sur la qualité de la communication perçue par l'utilisateur.

La figure 2a illustre un mode particulier de réalisation du procédé de localisation mis en oeuvre par exemple par le terminal 10 de la figure 1. Le procédé peut également être mis en oeuvre par un équipement ou un noeud réseau.

Lors d'une étape 20 une première donnée de qualité de service est obtenue. Par exemple, les données de communication peuvent être transmises en utilisant le protocole RTP. La donnée de qualité de service pourra alors être obtenue grâce au protocole complémentaire RTCP et à partir des paquets de données de communication reçus par le terminal 10 et envoyées par le terminal 11 avec lequel la communication est établie.

Selon une étape 21 a, de manière optionnelle, le terminal 10 émet une commande apte à déclencher sur la passerelle média, un changement du mode de gestion de la session multimédia vers un mode de gestion dit « mode relais ». L'envoi de cette commande peut être avantageusement effectué d'une manière automatique, suite à la comparaison de la première donnée de qualité de service obtenue lors de l'étape 20 avec un ou plusieurs seuils prédéterminés : lorsque le ou les seuils prédéfinis sont dépassés, par exemple après détection d'un taux de perte de paquet IP > 3% et/ou un délai de bout en bout > 500ms et/ou une gigue > 200ms ou encore d'autres paramètres représentatifs de la qualité de service, l'émission de la commande peut alors être déclenchée. L'envoi de la commande peut également être provoquée par une action de l'utilisateur A sur l'interface graphique du terminal 10. Cette dernière possibilité a l'avantage de permettre à un utilisateur de déclencher lui-même un changement du mode de gestion de la session par la passerelle média s'il juge que la qualité de la communication n'est pas satisfaisante.

Dans le cas d'une communication établie suivant le protocole SIP, la commande émise par le terminal lors de l'étape 21a peut être, par exemple, un message de renégociation SIP de type RE-INVITE ou UPDATE+PRACK comprenant une composante SDP (Session Description Protocol) enrichie d'un nouveau paramètre, par exemple, l'attribut a=sendrecv peut prendre la valeur a=sendrecv;b2b. D'une manière générale, tout message apte à provoquer une renégociation des flux de données média peut être utilisé pour transmettre la commande.

Selon une étape 22, de manière optionnelle, le terminal 10 attend la confirmation du changement du mode de gestion de la session sur la passerelle média. Dans le cas où la communication serait établie suivant le protocole SIP, le changement du mode de gestion de la session pourra être avantageusement signalée par une information nouvelle ajoutée dans la réponse ou l'acquittement du message de renégociation, comme par exemple l'attribut a=sendrecv ;b2b tel qu'évoqué à l'étape 21 a. Le changement du mode de gestion de la session peut aussi bien être signalé dans la bande, c'est-à-dire dans le flux de paquets de données de communication. Par exemple, si les données de communication sont transmises par le protocole RTP, le terminal 10 peut interpréter un changement de la valeur du champ SSRC (Synchronization SouRCe) de l'entête du paquet RTP comme étant un signal de changement du mode de gestion de la session sur la passerelle média. Ce changement de mode peut également être signalé en utilisant par exemple le protocole décrit dans le standard IETF RFC 4733 ou encore par d'autres moyens de signalisation.

Lors de l'étape 23, suite au changement du mode de gestion de la session sur la passerelle média, une seconde donnée de qualité de service est obtenue, par exemple à partir du protocole RTCP et à partir des paquets de données de communication reçus par le terminal. Cette seconde donnée de qualité de service est alors relative au premier tronçon de la communication, établi entre le terminal 10 de l'utilisateur A et la passerelle multimédia 12.

Le terminal 10 peut alors, suivant une étape 24, effectuer une comparaison entre la première donnée de qualité de service, relative à la session multimédia établie de bout en bout entre le terminal 10 et le terminal 11 et la seconde donnée de qualité de service, relative à la session multimédia établie entre le terminal 10 et la passerelle média 12.

Si la première donnée de qualité de service fait état de perturbations et que la seconde données de qualité de service fait également état de ces perturbations, le terminal 10 peut ainsi déduire lors d'une étape 25 que le tronçon situé entre le terminal 10 et la passerelle multimédia est responsable d'au moins une partie des perturbations. En revanche, si la deuxième donnée de qualité de service fait état d'une communication correcte, c'est que les perturbations ont lieu sur le tronçon situé entre la passerelle média 12 et le terminal 11.
Ainsi, le terminal 10 a une information de localisation des perturbations rencontrées durant la communication.

Selon une étape 26, de manière optionnelle, le terminal 10 peut par exemple afficher une représentation simplifiée du réseau de bout en bout et de l'endroit posant problème, et/ou des indications et conseils permettant aux utilisateurs de remédier à cet état de fait.

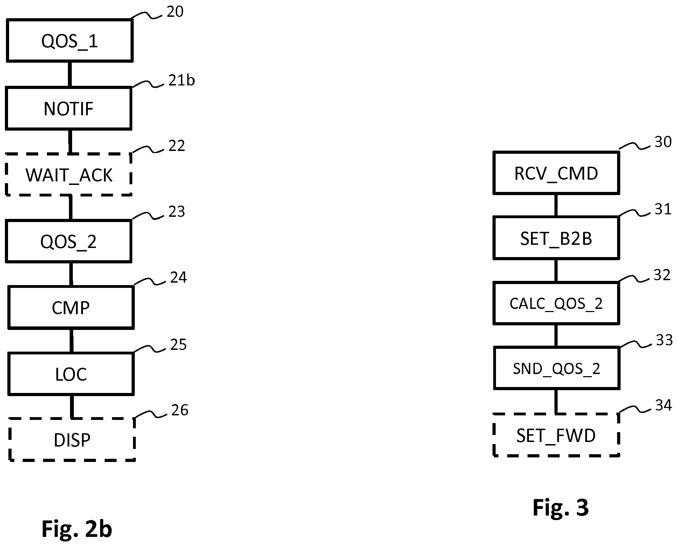

La figure 2b illustre un autre mode de réalisation du procédé de localisation. Les étapes 20, 22, 23, 24, 25 et 26 sont identiques à celles décrites en relation avec la figure 2a. Le procédé comprend en outre une étape 21b au cours de laquelle le terminal 11 par exemple, peut être informé que le terminal 10 a émis une commande de changement de mode de fonctionnement vers la passerelle média 12. Cette notification peut lui parvenir par exemple sous la forme d'un message de renégociation des médias, comme par exemple dans le cas d'une communication SIP, d'un message de type RE-INVITE ou UPDATE+PRACK comprenant une composante SDP (Session Description Protocol) enrichie d'un nouveau paramètre. Par exemple, l'attribut a=sendrecv prendra la valeur a=sendrecv;b2b.

La figure 3 illustre un mode particulier de réalisation du procédé d'aide au diagnostic mis en oeuvre, par exemple, par la passerelle média 12 de la figure 1.
Dans cet exemple, la passerelle média 12 fonctionne initialement dans un mode dit « mode routeur » dans lequel elle retransmet, sans traitement particulier, les paquets de données de communication et de qualité de service reçus du terminal 10 vers le terminal 11 et inversement. Ce mode de fonctionnement est connu sous le nom de « forwarding » ou mode « proxy » par l'homme du métier.
Selon une première étape 30, la passerelle média obtient une commande de changement du mode de gestion de la session multimédia. Selon un mode particulier de réalisation, cette commande peut être obtenue suite à la réception, de manière directe ou indirecte, par la passerelle média 12 du message émis par le terminal 10 selon l'étape 21a de la figure 2a. La commande peut par exemple être obtenue par l'intermédiaire d'un noeud réseau apte à interpréter le protocole de signalisation mis en oeuvre pour établir la session multimédia. Dans le cas d'un réseau de type IMS, ce noeud réseau peut être par exemple un AS de téléphonie (Application Server) ou encore un P-CSCF ou tout autre entité capable de communiquer avec le terminal et la passerelle média.

Lors d'une étape 31, la passerelle média 12 active un second mode de gestion dit « mode relais » dans lequel la session multimédia initialement établie de bout en bout entre les deux terminaux 10 et 11 est scindée en deux sessions distinctes, une première session établie entre le premier terminal 10 et la passerelle média 12, une seconde session établie entre la passerelle média 12 et le terminal 11. Dans le cas d'une communication suivant le protocole SIP, ce mode de fonctionnement est connu par l'homme du métier sous le terme de « back to back ». Dans ce mode de fonctionnement, la passerelle média relaye de façon bidirectionnelle le contenu des paquets de données média reçus d'une session vers l'autre session. Elle se comporte alors comme deux terminaux tête bêche et dispose de moyens de traitement supplémentaires pour gérer 2 sessions RTP+RTCP distinctes. La passerelle média 12 mémorise alors des informations lors de la réception et de l'émission de chaque parquet de données de communication. Ces informations permettent à la passerelle média de générer elle-même régulièrement une seconde donnée de qualité de service à l'étape 32, relative à chacune des sessions et fournissant par exemple des informations sur les pertes de paquets, sur le retard ou encore la gigue.

Selon une étape 33, la passerelle média émet alors vers les terminaux 10 et 11 la donnée de qualité de service correspondant respectivement à la session établie entre le terminal 10 et la passerelle média et entre la passerelle média et le terminal 11.

Lors d'une étape 34, la passerelle média peut revenir au mode de fonctionnement initial, dit « mode routeur ». Ce retour au mode « routeur » peut par exemple être provoqué par la réception d'une commande émise par le terminal 11 suite à l'étape de localisation 25 de la figure 2a ou par tout autre équipement apte à détecter la fin de la procédure de diagnostic. Par exemple, le retour au mode « routeur » peut également survenir à l'initiative de la passerelle média après l'écoulement d'un délai prédéterminé.

Ainsi, si par exemple un problème de qualité de service est dû à des perturbations sur le réseau d'accès 14 du terminal 11 (par exemple un problème de qualité du signal d'un point d'accès wifi), la seconde donnée de qualité de service reçue par le terminal 11 suite au déroulement du procédé de diagnostic va confirmer que le problème est imputable au réseau d'accès 14 ou au terminal 11. Corrélativement, la seconde donnée de qualité de service reçue par le terminal 10 va confirmer que le réseau d'accès 13 et le terminal 10 sont hors de cause. Le procédé d'aide au diagnostic a contribué à déterminer le tronçon responsable des perturbations rencontrées.

Selon un autre mode de réalisation, la commande de changement du mode de gestion de la session multimédia obtenue à l'étape 30 peut être obtenue suite à la détection d'un problème de qualité de service par un équipement média. Dans le cas d'une communication SIP, cet équipement peut être par exemple un C-BGF (Core Border Gateway Function), ou tout autre équipement capable d'inspecter les paquets de données échangés par les terminaux. Par exemple, la passerelle média 12 peut détecter elle-même un problème de qualité de service en analysant les paquets RTCP échangés de bout en bout pas les terminaux 10 et 11. Suite à la détection du problème, la passerelle média peut indiquer à un noeud réseau approprié (comme par exemple un AS de téléphonie ou un P-CSCF dans le cas d'un réseau de type IMS) d'engager une procédure de renégociation de la session multimédia de façon à découper la session initialement établie de bout en bout en deux sessions distinctes.
Une fois le diagnostic réalisé par le C-BGF, une notification peut être transmise au terminal incriminé par le P-CSCF, par exemple via les serveurs de notification des fournisseurs de terminaux ou par un message SMS (pour Short Message Service). Dans le cas d'une communication SIP, l'identifiant du terminal qui peut être nécessaire au fonctionnement des notifications peut être transmis dans le protocole SDP, par exemple dans le champ « i » (pour information). Ce mode de réalisation à l'avantage de permettre aux utilisateurs de terminaux ne mettant pas en oeuvre l'invention de bénéficier du service de localisation d'un problème de qualité de service.

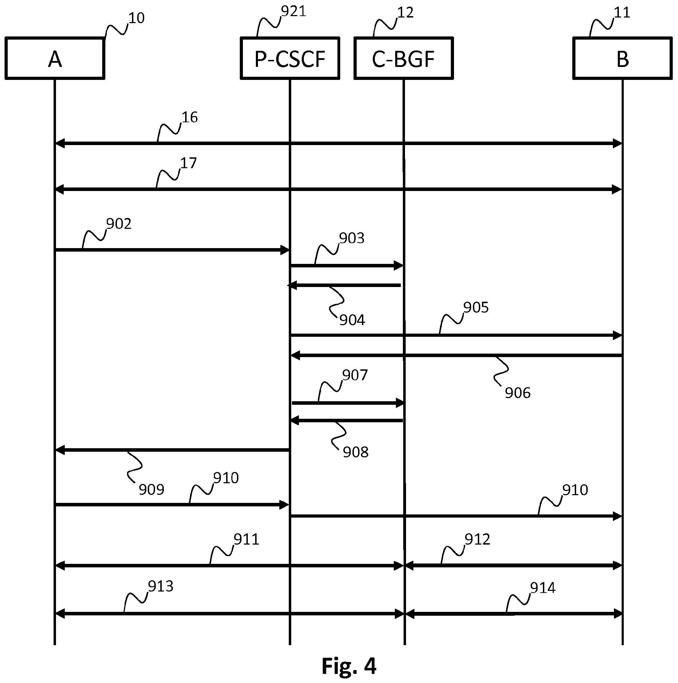

La figure 4 illustre de façon non exhaustive des messages qui peuvent être échangés dans un environnement IMS pour mettre en oeuvre les procédés de localisation et d'aide au diagnostic dans un mode de réalisation particulier. Le terminal A (10) et le terminal B (11) sont enregistrés par exemple dans un coeur de réseau IMS incluant le P-CSCF (921), mais les terminaux peuvent aussi bien être enregistrés sur des coeurs de réseau différents. Dans cet exemple, une communication est établie entre les terminaux A (10) et B (11) suivant l'état de l'art. Une session multimédia est établie de bout en bout entre les terminaux et illustrée sur la figure par un flux RTP bidirectionnel (16) et un flux de données de qualité de service bidirectionnel RTCP (17). Les flux transitent de façon transparente au travers du C-BGF (12), sans traitement particulier.

Suite à la détection d'un problème de qualité de service ou d'une action de l'utilisateur, le terminal A (10) émet une commande de changement de mode de fonctionnement de la passerelle média C-BGF (12). Dans cet exemple, la commande est transmise au P-CSCF (921) sous la forme d'une requête SIP de type Re-INVITE (902) dans laquelle est encapsulée une description SDP comportant un paramètre additionnel, par exemple « b2b », dans l'attribut a=sendrecv. Le P-CSCF (921) émet une demande de réservation de ressource (903) au niveau du C-BGF (12) qui lui retourne (904) l'adresse IP et le numéro de port alloués à cette session média. Le P-CSCF transmet ensuite (905) la requête Re-INVITE dont le SDP a été modifié avec les informations retournées par le C-BGF (adresse et numéro de port) au terminal B (11), de façon à forcer les flux RTP et RTCP à transiter par le C-BGF. Le paramètre additionnel « b2b » ajouté au SDP par le terminal A (10) peut être filtré par un équipement réseau avant d'être transféré au terminal B (11). Suivant le mode de réalisation, le terminal B peut donc être notifié ou non du déclenchement du procédé de localisation. Dans le cas où le paramètre n'est pas filtré, il peut parvenir au terminal B qui est alors apte à interpréter la nouvelle donnée de qualité de service, bien qu'il ne soit pas à l'initiative de la demande de diagnostic. Le terminal B (11) accepte et répond par exemple avec un message SIP 200 OK (906) à destination du P-CSCF. Le P-CSCF (921) émet une demande de réservation de ressource (907) au niveau du C-BGF (12) qui lui retourne (908) l'adresse IP et le numéro de port alloués à cette session média. Ce dernier transfère alors la réponse au terminal A (909) après avoir modifié le SDP avec l'adresse IP et le numéro de port alloué par le C-BGF, de façon à forcer les flux RTP et RTCP à transiter par le C-BGF. Le terminal A acquitte la réponse finale 200 OK par l'envoi d'un message ACK (910) qui est transmis jusqu'au terminal B (11). A partir de ce moment, le C-BGF fonctionne en un mode « back to back » média RTP et RTCP, dit mode « relais », les flux média de A (10) vers B (11) étant échangés entre le terminal A et le C-BGF (911), puis entre le C-BGF et le terminal B (912). De même, les flux de qualité de service sont échangés entre le terminal A et le C-BGF (913), puis entre le C-BGF et le terminal B (914).

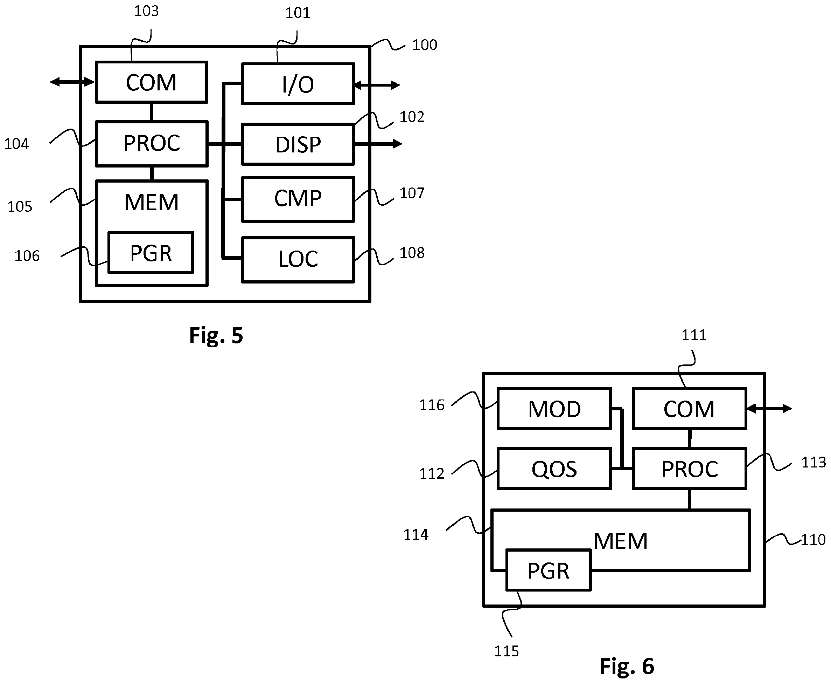

La figure 5 illustre l'architecture d'un dispositif 100 mettant en oeuvre le procédé de localisation d'un problème de qualité de service selon un mode particulier de réalisation de l'invention.
Le dispositif comprend un espace de stockage 105, par exemple une mémoire MEM, une unité de traitement 104 équipée par exemple d'un processeur PROC. L'unité de traitement peut être piloté par un programme 106, par exemple un programme d'ordinateur PGR, mettant en oeuvre le procédé de localisation tel que décrit dans l'invention en référence aux figures 2a, 2b et 4, et notamment les étapes d'obtention des première et deuxième données de QoS (20, 23), de comparaison de la première et de la deuxième donnée de QoS (24) et de localisation du problème en fonction du résultat de la comparaison (25).
A l'initialisation, les instructions du programme d'ordinateur 106 sont par exemple chargées dans une mémoire RAM (Random Access Memory) avant d'être exécutées par le processeur de l'unité de traitement 104. Le processeur de l'unité de traitement 104 met en oeuvre les étapes du procédé de localisation d'un problème de QoS selon les instructions du programme d'ordinateur 106.
Pour cela, le dispositif comprend, outre la mémoire 105, des moyens de communication 103 (COM) permettant au dispositif de se connecter au réseau de communication et d'échanger des données avec d'autres dispositifs par l'intermédiaire du réseau de télécommunications, et par exemple d'établir une communication téléphonique ou visiophonique. Ces moyens de communication peuvent par exemple être une interface réseau et servent notamment à obtenir les première et deuxième données de QoS. Le dispositif comprend également des moyens de comparaison 107 (CMP) entre une première et une deuxième qualité de service ainsi que des moyens de localisation d'un problème de QoS 108 (QOS) à partir du résultat d'une comparaison de données de QoS.
Le dispositif comprend également des moyens d'interaction utilisateur 101 (1/0) tels que par exemple un clavier, un écran tactile ou une interface affichée sur l'écran du terminal. Ces moyens d'interaction permettent à un utilisateur par exemple de composer un numéro, de lancer une application de téléphonie ou de visiophonie. Selon un mode particulier de réalisation, ces moyens permettent à l'utilisateur d'activer le procédé de localisation d'un problème de qualité de service. Selon un mode particulier de réalisation de l'invention, le dispositif comprend des moyens d'affichage 102 (DISP) tels que par exemple un écran permettant par exemple d'afficher sous forme visuelle une représentation simplifiée du réseau de bout en bout et de l'endroit posant problème, et/ou des indications et conseils permettant aux utilisateurs de remédier à cet état de fait. Selon un autre mode de réalisation particulier, le dispositif est intégré dans un terminal de type téléphone mobile, tablette, ordinateur personnel, télévision connectée à un réseau de télécommunication, borne interactive ou encore n'importe quel autre équipement connecté à un réseau de communication.

La figure 6 illustre l'architecture d'un dispositif 110 mettant en oeuvre le procédé d'aide au diagnostic d'un problème de QoS, selon un mode particulier de réalisation de l'invention.
Le dispositif comprend un espace de stockage 114, par exemple une mémoire 114 (MEM), une unité de traitement 113 équipée par exemple d'un processeur PROC. L'unité de traitement peut être piloté par un programme 115, par exemple un programme d'ordinateur PGR, mettant en oeuvre le procédé d'aide au diagnostic tel que décrit dans l'invention en référence aux figures 3 et 4, et notamment les étapes d'obtention d'une demande de changement de mode de fonctionnement (30, 34), d'activation du mode de fonctionnement «relais» (31), de calcul de données de qualité de service (32), de transmission de données de qualité de service vers les terminaux (33).
A l'initialisation, les instructions du programme d'ordinateur 115 sont par exemple chargées dans une mémoire RAM avant d'être exécutées par le processeur de l'unité de traitement 113. Le processeur de l'unité de traitement 113 met en oeuvre les étapes du procédé de localisation d'un problème de QoS selon les instructions du programme d'ordinateur 115.
Pour cela, le dispositif comprend, outre la mémoire 114, des moyens de communication 111 (COM) permettant au dispositif de se connecter au réseau de communication et d'échanger des données avec d'autres dispositifs par l'intermédiaire du réseau de télécommunications et en particulier d'assurer le transit des données de communication et de qualité de service selon les modes de gestion « routeur » et « relais ». En particulier, ces moyens de communication permettent l'envoi et la réception des données de communication et des données de qualité de service.
Ces moyens de communication peuvent par exemple être des interfaces réseau. Selon un mode de réalisation particulier, le dispositif comprend un module 112 (QOS) d'analyse et de génération de données de qualité de service relatives au flux média transitant dans la passerelle. Ce module peut par exemple analyser les données de qualité de service échangées entre les terminaux pour déclencher automatiquement un diagnostic d'un problème de QoS. Ce module peut également calculer les données de QoS quand la passerelle est dans un mode de gestion « Relais ». Le dispositif comprend également un moyen permettant de modifier le mode de fonctionnement 116 (MOD) du mode « routeur » vers le mode « relais » et inversement.
Selon un autre mode de réalisation particulier, le dispositif est intégré dans un équipement réseau comme un équipement de type C-BGF, un serveur d'application (AS pour Application Server en anglais) qui pilote un MRF (Media Ressource Function) ou n'importe quel équipement apte à intercepter les données de communication et de QoS échangées entre des terminaux.

## Revendications

1. Procédé de localisation d'un problème de qualité de service mis en oeuvre sur un terminal (10) lors d'une session multimédia établie entre deux terminaux (10 et 11) au travers d'un ou plusieurs réseaux de communication (15) comprenant au moins une passerelle média (12) apte à retransmettre les paquets de données média sans traitement particulier selon un premier mode de gestion dit « mode routeur », les terminaux obtenant une première donnée de qualité de service (20) relative à la session multimédia, le procédé étant **caractérisé en ce qu'**il comporte, suite à un changement du mode de gestion de la session multimédia par la passerelle média vers un mode de gestion dit « mode relais » dans lequel la session multimédia initialement établie entre les terminaux est scindée en deux sessions multimédia distinctes, les étapes suivantes :
- obtention (23) d'une seconde donnée de qualité de service relative à l'une des deux sessions multimédia établie suite au changement de mode de gestion de la passerelle média ;
- comparaison (24) de la première et de la seconde donnée de qualité de service ;
- localisation (25) du problème de qualité de service en fonction du résultat de la comparaison.

2. Procédé selon la revendication 1, **caractérisé en ce qu'**il comporte une étape d'envoi (21 a) d'une demande de changement du mode de gestion vers la passerelle média précédant l'étape d'obtention de la seconde donnée de qualité de service.

3. Procédé selon la revendication 2, **caractérisé en ce que** l'étape d'envoi (21 a) de la demande de changement du mode de gestion est déclenchée suite à la détection d'un problème de qualité de service par comparaison de la première donnée de qualité de service à un seuil prédéterminé.

4. Procédé selon la revendication 2, **caractérisé en ce que** l'étape d'envoi (21 a) de la demande de changement du mode de gestion est déclenchée suite à une action de l'utilisateur sur une interface du premier ou deuxième terminal.

5. Procédé selon l'une des revendications 1 ou 2, **caractérisé en ce qu'**il comporte une étape de réception d'une notification du changement du mode de gestion de la passerelle média.

6. Procédé selon la revendication 1, **caractérisé en ce qu'**il comporte une étape d'obtention de paramètres pouvant influencer la qualité de service sur le terminal et une étape de suggestion d'actions possibles pour améliorer la qualité de service en fonction des paramètres obtenus.

7. Procédé selon la revendication 1, **caractérisé en ce qu'**il comporte suite à l'étape de localisation, une étape d'envoi vers la passerelle média d'une commande de changement du mode de gestion de la session multimédia vers le mode de gestion dit « mode routeur ».

8. Procédé d'aide au diagnostic d'un problème de qualité de service mis en oeuvre par une passerelle média lors d'une session multimédia établie entre deux terminaux, la passerelle média étant apte à retransmettre les paquets de données sans traitement particulier selon un premier mode de gestion dit « mode routeur », le procédé étant **caractérisé en ce qu'**il comporte les étapes suivantes :
- obtention (30) d'une demande de changement du mode de gestion de la session multimédia ;
- activation (31) d'un second mode de gestion dit « mode relais » dans lequel la session multimédia initialement établie entre les deux terminaux est scindée en deux sessions distinctes, une première session établie entre un premier terminal et la passerelle média, une seconde session établie entre la passerelle média et un second terminal, la passerelle média relayant de façon bidirectionnelle les paquets de données média reçus d'une session vers l'autre session ;
- calcul (32) de la donnée de qualité de service relative à la première session et calcul de la donnée de qualité de service relative à la seconde session.
- transmission (33) vers le premier terminal de la donnée de qualité de service relative à la première session et transmission vers le second terminal de la donnée de qualité de service relative à la seconde session.
- changement (34) du mode de gestion de la session vers le mode « routeur »

9. Procédé selon la revendication 8, **caractérisé en ce que** la demande de changement du mode de gestion (30) est obtenue suite à la détection d'un problème de qualité de service par comparaison d'une donnée de qualité de service relative à la session établie en « mode routeur » à un seuil prédéterminé.

10. Dispositif de localisation (100) d'un problème de qualité de service lors d'une session multimédia établie entre deux dispositifs au travers d'un ou plusieurs réseaux de communication comprenant au moins une passerelle média apte à retransmettre les paquets de données media sans traitement particulier selon un premier mode de gestion dit « mode routeur », les dispositifs obtenant une première donnée de qualité de service relative à la session multimédia, le dispositif étant **caractérisé en ce qu'**il comporte:
- un module d'obtention (103) d'une seconde donnée de qualité de service relative à l'une des deux sessions multimédia établie suite au changement de mode de gestion de la passerelle média ;
- un module de comparaison (107) de la première et de la seconde donnée de qualité de service ;
- un module de localisation (108) du problème de qualité de service en fonction du résultat de la comparaison ;
Ces modules étant mis en oeuvre suite à un changement du mode de gestion de la session multimédia par la passerelle média vers un mode de gestion dit « mode relais » dans lequel la session multimédia initialement établie entre les dispositifs est scindée en deux sessions multimédia distinctes.

11. Terminal de communication **caractérisé en ce qu'**il comprend un dispositif selon la revendication 10.

12. Dispositif d'aide au diagnostic (110) d'un problème de qualité de service lors d'une session multimédia établie entre deux terminaux, le dispositif étant apte à retransmettre les paquets de données sans traitement particulier selon un premier mode de gestion dit « mode routeur », le dispositif étant **caractérisé en ce qu'**il comprend :
- un module d'obtention (111) d'une demande de changement du mode de gestion de la session multimédia ;
- un module d'activation (116) d'un second mode de gestion dit « mode relais » dans lequel la session multimédia initialement établie entre les deux terminaux est scindée en deux sessions distinctes, une première session établie entre un premier terminal et le dispositif, une seconde session établie entre le dispositif et un second terminal, le dispositif relayant de façon bidirectionnelle les paquets de données média reçus d'une session vers l'autre session ;
- un module de calcul de la donnée de qualité (112) de service relative à la première session et calcul de la donnée de qualité de service relative à la seconde session.
- un module de transmission (111) vers le premier terminal de la donnée de qualité de service relative à la première session et transmission vers le second terminal de la donnée de qualité de service relative à la seconde session.
- un module de changement du mode de gestion (116) de la session vers le mode « routeur »

13. Passerelle média **caractérisée en ce qu'**elle comporte un dispositif d'aide au diagnostic selon la revendication 12.

14. Système de localisation d'un problème de QoS **caractérisé en ce qu'**il comprend au moins un dispositif de localisation conforme à la revendication 10 et au moins un dispositif d'aide au diagnostic conforme à la revendication 12.

15. Programme d'ordinateur comportant des instructions pour l'exécution du procédé de localisation selon l'une quelconque des revendications 1 à 7 et/ou du procédé d'aide au diagnostic selon l'une quelconque des revendication 8 à 9, lorsque le programme est exécuté par un processeur.

## Patentansprüche

1. Verfahren zum Lokalisieren eines Dienstqualitätsproblems, das in einem Endgerät (10) in einer Multimediasitzung ausgeführt wird, die zwischen zwei Endgeräten (10 und 11) über ein oder mehrere Kommunikationsnetze (15) aufgebaut worden ist, die wenigstens eine Medienbrücke (12) enthalten, die Medien-Datenpakete ohne besondere Verarbeitung gemäß einem ersten Steuermodus, der "Router-Modus" genannt wird, übertragen kann, wobei die Endgeräte eine erste Dienstqualität-Dateneinheit (20) bezüglich der Multimediasitzung erhalten, wobei das Verfahren **dadurch gekennzeichnet ist, dass** es nach einer Änderung des Steuermodus der Multimediasitzung durch die Medienbrücke zu einem Steuermodus, der "Weiterleitungsmodus" genannt wird, in dem die ursprünglich aufgebaute Multimediasitzung zwischen den Endgeräten in zwei verschiedene Multimediasitzungen aufgeteilt wird, die folgenden Schritte umfasst:
- Erhalten (23) einer zweiten Dienstqualität-Dateneinheit bezüglich einer der beiden Multimediasitzungen, die nach der Änderung des Steuermodus der Medienbrücke aufgebaut worden sind;
- Vergleichen (24) der ersten und der zweiten Dienstqualität-Dateneinheiten; und
- Lokalisieren (25) des Dienstqualitätsproblems als Funktion des Ergebnisses des Vergleichs.

2. Verfahren nach Anspruch 1, **dadurch gekennzeichnet, dass** es einen Schritt (21a) des Schickens einer Anforderung zum Ändern des Steuermodus zu der Medienbrücke vor dem Schritt des Erhaltens der zweiten Dienstqualität-Dateneinheit umfasst.

3. Verfahren nach Anspruch 2, **dadurch gekennzeichnet, dass** der Schritt (21a) des Schickens der Anforderung zum Ändern des Steuermodus nach der Detektion eines Dienstqualitätsproblems durch Vergleichen der ersten Dienstqualität-Dateneinheit mit einem vorgegebenen Schwellenwert ausgelöst wird.

4. Verfahren Handbuch 2, **dadurch gekennzeichnet, dass** der Schritt (21a) des Schickens der Anforderung zum Ändern des Steuermodus nach einer Einwirkung des Anwenders auf eine Schnittstelle des ersten oder des zweiten Endgeräts ausgelöst wird.

5. Verfahren nach einem der Ansprüche 1 oder 2, **dadurch gekennzeichnet, dass** es einen Schritt des Empfangens einer Meldung über die Änderung des Steuermodus von der Medienbrücke umfasst.

6. Verfahren nach Anspruch 1, **dadurch gekennzeichnet, dass** es einen Schritt des Erhaltens von Parametern, die die Dienstqualität in dem Endgerät beeinflussen können, und einen Schritt des Vorschlagens möglicher Einwirkungen, um die Dienstqualität zu verbessern, als Funktion der erhaltenen Parameter umfasst.

7. Verfahren nach Anspruch 1, **dadurch gekennzeichnet, dass** es nach dem Lokalisierungsschritt einen Schritt des Schickens eines Befehls zum Ändern des Steuermodus der Multimediasitzung zu dem sogenannten "Router-Modus"-Steuermodus zu der Medienbrücke umfasst.

8. Verfahren zum Unterstützen der Diagnose eines Dienstqualitätsproblems, das durch eine Medienbrücke in einer Multimediasitzung ausgeführt wird, die zwischen zwei Endgeräten aufgebaut worden ist, wobei die Medienbrücke die Datenpakete ohne besondere Verarbeitung gemäß einem ersten Steuermodus, der "Router-Modus" genannt wird, übertragen kann, wobei das Verfahren **dadurch gekennzeichnet ist, dass** es die folgenden Schritte umfasst:
- Erhalten (30) einer Anforderung zum Ändern des Steuermodus der Multimediasitzung;
- Aktivieren (31) eines zweiten Steuermodus, der "Weiterleitungsmodus" genannt wird, in den die ursprünglich aufgebaute Multimediasitzung zwischen den beiden Endgeräten in zwei verschiedene Sitzungen aufgeteilt wird, wobei eine erste Sitzung zwischen einem ersten Endgerät und der Medienbrücke aufgebaut wird und eine zweite Sitzung zwischen der Medienbrücke und einem zweiten Endgerät aufgebaut wird, wobei die Medienbrücke die empfangenen Medien-Datenpakete von der einen Sitzung zu der anderen Sitzung bidirektional weiterleitet;
- Berechnen (32) der Dienstqualität-Dateneinheit bezüglich der ersten Sitzung und Berechnen der Dienstqualität-Dateneinheit bezüglich der zweiten Sitzung;
- Senden (33) der Dienstqualität-Dateneinheit bezüglich der ersten Sitzung an das erste Endgerät und Senden der Dienstqualität-Dateneinheit bezüglich der zweiten Sitzung an das zweite Endgerät;
- Ändern (34) des Steuermodus der Sitzung zu dem "Router-Modus".

9. Verfahren nach Anspruch 8, **dadurch gekennzeichnet, dass** die Anforderung zum Ändern des Steuermodus (30) nach der Detektion eines Dienstqualitätsproblems durch Vergleichen einer Dienstqualität-Dateneinheit bezüglich der im "Router-Modus" aufgebauten Sitzung mit einem vorgegebenen Schwellenwert erhalten wird.

10. Vorrichtung (100) zum Lokalisieren eines Dienstqualitätsproblems in einer Multimediasitzung, die zwischen zwei Vorrichtungen über ein oder mehrere Kommunikationsnetze aufgebaut wird, die wenigstens eine Medienbrücke enthalten, die die Medien-Datenpakete ohne besondere Verarbeitung gemäß einem ersten Steuermodus, der "Router-Modus" genannt wird, übertragen kann, wobei die Vorrichtungen eine erste Dienstqualität-Dateneinheit bezüglich der Multimediasitzung erhalten, wobei die Vorrichtung **dadurch gekennzeichnet ist, dass** sie Folgendes umfasst:
- ein Modul (103) zum Erhalten einer zweiten Dienstqualität-Dateneinheit bezüglich einer der beiden Multimediasitzungen, die nach der Änderung des Steuermodus der Medienbrücke aufgebaut werden;
- ein Modul (107) zum Vergleichen der ersten und der zweiten Dienstqualität-Dateneinheit; und
- ein Modul (108) zum Lokalisieren des Dienstqualitätsproblems als Funktion des Ergebnisses des Vergleichs;
wobei diese Module nach einer Änderung des Steuermodus der Multimediasitzung durch die Medienbrücke zu einem Steuermodus, der "Weiterleitungsmodus" genannt wird, in dem die ursprünglich aufgebaute Multimediasitzung zwischen den Vorrichtungen in zwei verschiedene Multimediasitzungen aufgeteilt wird, betrieben werden.

11. Kommunikationsendgerät, **dadurch gekennzeichnet, dass** es eine Vorrichtung nach Anspruch 10 umfasst.

12. Vorrichtung zum Unterstützen der Diagnose (110) eines Dienstqualitätsproblems bei einer Multimediasitzung, die zwischen zwei Endgeräten aufgebaut worden ist, wobei die Vorrichtung die Datenpakete ohne besondere Verarbeitung gemäß einem ersten Steuermodus, der "Router-Modus" genannt wird, übertragen kann, wobei die Vorrichtung **dadurch gekennzeichnet ist, dass** sie Folgendes umfasst:
- ein Modul (111) zum Erhalten einer Anforderung zum Ändern des Steuermodus der Multimediasitzung;
- ein Modul (116) zum Aktivieren eines zweiten Steuermodus, der "Weiterleitungsmodus" genannt wird, in dem die ursprünglich aufgebaute Multimediasitzung zwischen den beiden Endgeräten in zwei verschiedene Sitzungen aufgeteilt wird, wobei eine erste Sitzung zwischen einem ersten Endgerät und der Vorrichtung aufgebaut wird und wobei eine zweite Sitzung zwischen der Vorrichtung und einem zweiten Endgerät aufgebaut wird, wobei die Vorrichtung die empfangenen Mediendaten-Pakete von einer Sitzung zu der anderen Sitzung bidirektional weiterleitet;
- ein Modul (112) zum Berechnen der Dienstqualität-Daten bezüglich der ersten Sitzung und zum Berechnen der Dienstqualität-Daten bezüglich der zweiten Sitzung;
- ein Modul (111) zum Senden der Dienstqualität-Daten bezüglich der ersten Sitzung an das erste Endgerät und zum Senden der Dienstqualität-Daten bezüglich der zweiten Sitzung an das zweite Endgerät; und
- ein Modul (116) zum Ändern des Steuermodus der Sitzung zu dem "Router-Modus".

13. Medienbrücke, **dadurch gekennzeichnet, dass** sie eine Diagnoseunterstützngsvorrichtung nach Anspruch 12 umfasst.

14. System zum Lokalisieren eines QoS-Problems, **dadurch gekennzeichnet, dass** es wenigstens eine Lokalisierungsvorrichtung nach Anspruch 10 und wenigstens eine Diagnoseunterstützngsvorrichtung nach Anspruch 12 umfasst.

15. Computerprogramm, das Befehle enthält, um das Lokalisierungsverfahren nach einem der Ansprüche 1 bis 7 und/oder das Diagnoseunterstützungsverfahren nach einem der Ansprüche 8 bis 9 abzuarbeiten, wenn das Programm durch einen Prozessor abgearbeitet wird.

## Claims

1. Method for locating a quality of service problem implemented on a terminal (10) during a multi-media session established between two terminals (10 and 11) over one or more communication networks (15) comprising at least one media gateway (12) that is able to retransmit the media data packets without particular processing according to a first mode of management called "router mode", the terminals obtaining a first quality of service data item (20) relating to the multi-media session, the method being **characterized in that**, following a change in the mode of management of the multi-media session by the media gateway to a mode of management called "relay mode" in which the multi-media session initially established between the terminals is split into two separate multi-media sessions, it includes the following steps:
- obtaining (23) of a second quality of service data item relating to one of the two multi-media sessions established following the change in the mode of management of the media gateway ;
- comparison (24) of the first and second quality of service data items;
- location (25) of the quality of service problem depending on the result of the comparison.

2. Method according to Claim 1, **characterized in that** it includes a step of sending (21a) a request to change the mode of management to the media gateway preceding the step of obtaining the second quality of service data item.

3. Method according to Claim 2, **characterized in that** the step of sending (21a) the request to change the mode of management is triggered following the detection of a quality of service problem by comparing the first quality of service data item with a predetermined threshold.

4. Method according to Claim 2, **characterized in that** the step of sending (21a) the request to change the mode of management is triggered following an action of the user on an interface of the first or second terminal

5. Method according to either of Claims 1 and 2, **characterized in that** it includes a step of receiving a notification of the change in the mode of management of the media gateway.

6. Method according to Claim 1, **characterized in that** it includes a step of obtaining parameters that are able to influence the quality of service on the terminal and a step of suggesting possible actions to improve the quality of service depending on the parameters obtained.

7. Method according to Claim 1, **characterized in that** it includes, following the location step, a step of sending to the media gateway a command to change the mode of management of the multi-media session to the mode of management called "router mode".

8. Method for aiding the diagnosis of a quality of service problem implemented by a media gateway during a multi-media session established between two terminals, the media gateway being able to retransmit the data packets without particular processing according to a first mode of management called "router mode", the method being **characterized in that** it includes the following steps:
- obtaining (30) of a request to change the mode of management of the multi-media session;
- activation (31) of a second mode of management called "relay mode" in which the multi-media session initially established between the two terminals is split into two separate sessions, a first session established between a first terminal and the media gateway, a second session established between the media gateway and a second terminal, the media gateway providing two-way relaying of the media data packets received from one session to the other session;
- computation (32) of the quality of service data item relating to the first session and computation of the quality of service data item relating to the second session;
- transmission (33) of the quality of service data item relating to the first session to the first terminal and transmission of the quality of service data item relating to the second session to the second terminal;
- changing (34) of the mode of management of the session to the "router" mode".

9. Method according to Claim 8, **characterized in that** the request to change the mode of management (30) is obtained following the detection of a quality of service problem by comparing a quality of service data item relating to the session established in "router mode" with a predetermined threshold.

10. Device (100) for locating a quality of service problem during a multi-media session established between two devices over one or more communication networks comprising at least one media gateway that is able to retransmit the media data packets without particular processing according to a first mode of management called "router mode", the devices obtaining a first quality of service data item relating to the multi-media session, the device being **characterized in that** it includes:
- a module (103) for obtaining a second quality of service data item relating to one of the two multi-media sessions established following the change in the mode of management of the media gateway;
- a module (107) for comparing the first and second quality of service data items;
- a module (108) for locating the quality of service problem depending on the result of the comparison; these modules being implemented following a change in the mode of management of the multi-media session by the media gateway to a mode of management called "relay mode" in which the multi-media session initially established between the devices is split into two separate multi-media sessions.

11. Communication terminal, **characterized in that** it comprises a device according to Claim 10.

12. Device (110) for aiding the diagnosis of a quality of service problem during a multi-media session established between two terminals, the device being able to retransmit the data packets without particular processing according to a first mode of management called "router mode", the device being **characterized in that** it comprises:
- a module (111) for obtaining a request to change the mode of management of the multi-media session;
- a module (116) for activating a second mode of management called "relay mode" in which the multi-media session initially established between the two terminals is split into two separate sessions, a first session established between a first terminal and the device, a second session established between the device and a second terminal, the device providing two-way relaying of the media data packets received from one session to the other session;
- a module (112) for computing the quality of service data item relating to the first session and computing the quality of service data item relating to the second session;
- a module (111) for transmitting the quality of service data item relating to the first session to the first terminal and transmitting the quality of service data item relating to the second session to the second terminal;
- a module (116) for changing the mode of management of the session to the "router" mode.

13. Media gateway, **characterized in that** it includes a diagnosis aid device according to Claim 12.

14. System for locating a QoS problem, **characterized in that** it comprises at least one location device according to Claim 10 and at least one diagnosis aid device according to Claim 12.

15. Computer program including instructions for the execution of the location method according to any one of Claims 1 to 7 and/or the diagnosis aid method according to either one of Claims 8 and 9 when the program is executed by a processor.
